# EUROPÄISCHE PATENTSCHRIFT

(11) **EP 1 097 954 B1**
(45) Veröffentlichungstag und Bekanntmachung des Hinweises auf die Patenterteilung: **09.05.2007**
(21) Anmeldenummer: 00120800.8
(22) Anmeldetag: 23.09.2000
(51) Int. Cl.: C08G 18/18, C08G 18/66, C08J 9/08

(54) **Verfahren zur Herstellung von Polyurethanschaumstoffen**
Process for the preparation of polyurethane foams
Procédé pour la préparation de mousses de polyuréthane

(30) Priorität: 03.11.1999 DE 19953060; 08.01.2000 DE 10000495
(43) Veröffentlichungstag der Anmeldung: 09.05.2001
(73) Patentinhaber: Otto Bock Schaumsysteme GmbH & Co. KG, 37115 Duderstadt (DE)
(72) Erfinder: Weber, Hans, 37115 Duderstadt (DE); Gansen, Peter Dr., 37136 Seeburg (DE)
(74) Vertreter: Läufer, Martina

(56) Entgegenhaltungen:
- EP-A- 0 088 377
- DE-A- 19 529 412
- US-A- 3 243 389
- US-A- 4 517 313

## Beschreibung

Die Erfindung betrifft ein Verfahren zur Herstellung von Polyurethanschaumstoff, insbesondere zur Herstellung von Polyurethanintegralschaumstoffen. Polyurethanschaumstoffe werden üblicherweise durch Vermischen einer Polyisocyanatkomponente aus wenigstens einem Di- oder Polyisocyanat mit einer Polyolkomponente aus wenigstens einem Polyether- oder Polyesterpolyol in Gegenwart wenigstens eines Katalysators und wenigstens eines Treibmittels und ggf. im Beisein verschiedener in der Polyurethanchemie gut bekannter Hilfs- und Zusatzstoffe hergestellt. Zu diesen Zusatzstoffen gehören ggf. auch Schaumstabilisatoren.

Durch gezielte Mitverwendung niedermolekularer Diole als Kettenverlängerer oder von Triolen und Aminen als Vernetzer können die Eigenschaften der PUR-Schaumstoffe in weiten Bereichen eingestellt werden.

Eine spezielle Variante der Formverschäumung ist der Reaktionsschaumguß, auch als RIM-(Reaktion Injektion Molding-)Verfahren bezeichnet. Es werden flexible bis halbharte Formteile aus Integralschaumstoff erhalten, für die charakteristisch ist, daß eine kompakte Randzone mit einem leichten zelligen Kern integral innerhalb eines Formteils aus dem gleichen PUR-Material verbunden ist. Derartige Formteile werden beispielsweise in der Automobilindustrie im Bereich der Autoinnenraumverkleidung, Armaturenbretter, Lenkräder, aber auch für Spoiler etc. verwendet. Ein ebenfalls großer und wichtiger Anwendungsbereich liegt bei der Schuhindustrie für Schuhsohlen oder Schuhbauteile. In zahlreichen weiteren Bereichen werden heute PUR-Schaumstoffe in großem Maßstab eingesetzt.

Als Treibmittel werden hauptsächlich Kohlendioxid oder Halogenalkane verwendet. Die Auswahl des Treibmittels richtet sich unter anderem nach dem aufzuschäumenden Reaktionsgemisch und der gewünschten Festigkeit sowie weiteren Eigenschaften des fertig aufgeschäumten Schaumstoffes. Für die Herstellung härterer Polyurethanschaumstoffe wurden bislang neben Wassser insbesondere Fluorchlorkohlenwasserstoffe (FCKW), Hydrogenfluorchlorkohlenwasserstoffe (HFCKW), Hydrogenfluorkohlenwasserstoffe (HFKW) oder spezielle Carbamate als Treibmittel verwendet. Wegen der bekannten ökologischen Problematik im Zusammenhang mit den genannten halogenhaltigen Treibmitteln geht deren Verwendung im Bereich der Integralschaumstoffe ständig zurück. Die Verwendung von Wasser als ausschließlichem Treibmittel stellt jedoch keine Lösung der Treibmittelproblematik dar, insbesondere weil erstens der Druckabbau im Schaumstoff wesentlich langsamer abläuft als bei Verwendung der bekannten halogenhaltigen Treibmittel, so daß bei der Serienproduktion üblichen kurzen Formstandzeiten Formkörper resultieren, die leicht zum Platzen neigen, und zweitens die Elastizität der resultierenden Formkörper (insbesondere bei Schuhsohlen) den Anforderungen der Praxis nicht genügt.

Der ebenfalls naheliegende Gedanke der Verwendung von Kohlenwasserstoffen, wie z.B. den isomeren Pentanen bzw. von Cyclopentanen zur Lösung der Treibmittelproblematik ist vor allem mit dem Problem der leichten Entflammbarkeit der Substanzen verbunden.

Als Katalysatoren zur Herstellung von Polyurethanschaumstoffen dienen hauptsächlich tertiäre Amine und zinnorganische Verbindungen. Für die o.g. Integralschaumstoff-Systeme werden üblicherweise tertiäre Amine eingesetzt. Eine Co-Katalyse durch Metallkatalysatoren ist möglich. Die mit Hilfe von Aminkatalysatoren hergestellten Schaumstoffe weisen verschiedene Nachteile auf. Die Aminkatalysatoren verbleiben im Schaumstoff, sind dort jedoch nicht fest gebunden, so daß im Laufe der Zeit insbesondere nach Wärmelagerung, eine lang andauernde bis ständige Geruchsausdünstung beobachtet wird. Die allmähliche gasförmige Ausdünstung von Aminen kann auch mit gesundheitlichen Belastungen der Verbraucher verbunden sein, so daß es ein dringendes Bedürfnis unter anderem der Autoindustrie ist, aminemissionsfreie PUR-Schaumstoffe, insbesondere für die Autoinnenraumauskleidung zur Verfügung zu haben. Weiterhin haben die mit Aminkatalysatoren hergestellten Schaumstoffe den Nachteil, daß sie bei Verarbeitung insbesondere als Laminat mit PVC zu einer Verfärbung des PVCs führen. Die bisher bekannten einbaubaren Amin-Katalysatoren besitzen alle die vorgenannten technischen Nachteile. Sie können zu unangenehmen Geruch oder zu PVC-Verfärbung führen, weil sie während der Reaktion teilweise verdampfen oder die Aushärtung des Schaumstoffes unzureichend ist.

Der Erfindung liegt daher die Aufgabe zugrunde, ein Verfahren zur Herstellung von Polyurethanschaumstoff zur Verfügung zu stellen, bei welchem auf die Mitverwendung von Fluor- und/oder Chlorkohlenwasserstoffen als Treibmitteln sowie auf herkömmliche Amin-Katalysatoren verzichtet werden kann. Dabei wird angestrebt, daß bei Formkörpern entsprechender Härte eine deutlich reduzierte PVC-Verfärbung bei Wärmelagerung und eine deutlich geringere Geruchsausdünstung als bei üblichen Formkörpern erreicht wird.

Überraschenderweise wurde jetzt gefunden, daß bestimmte Carbamate der nachstehend näher beschriebenen Art Katalysatoren und Treibmittel darstellen, die insbesondere auch die Herstellung von Polyurethanschaumstoffen kompakter Oberflächen ermöglichen. Dabei kann auf die Verwendung von zusätzlichen Treibmitteln ganz oder teilweise verzichtet werden. Darüberhinaus werden herkömmliche Aminkatalysatoren vollständig ersetzt. Eine Co-Katalyse mit anderen die Polyurethanbildung katalysierenden Katalysatoren, beispielsweise bestimmten Metallkatalysatoren, ist jedoch möglich.

Die EP-B 0 121 850 beschreibt zwar bereits die Verwendung bestimmter Carbamate, die Hydroxylgruppen tragen, als Treibmittel für Polyurethanschaumstoffe, wobei diese wie den Ausführungsbeispielen zu entnehmen, vorzugsweise in Kombination mit anderen Treibmitteln zum Einsatz gelangen. Die EP-B 0 121 850 vermittelt jedoch keinen Hinweis auf den überraschenden Befund, daß Carbamate auch als Katalysatoren für die Herstellung von Polyurethanschaumstoffen eingesetzt werden können. Aufgrund ihrer speziellen Konstitution können die angegebenen Carbamate die tertiären Amin-Katalysatoren auch nicht ersetzen.

Die EP-B-10652250 beschreibt den Einsatz von hydroxylgruppenhaltigen Carbamaten als ausschließliches Treibmittel für Integralschaumstoffe. Auch hier geht es nicht um den Ersatz von Katalysatoren, vielmehr werden dabei Katalysatoren verwendet, die zu den o.g. unerwünschten Begleiterscheinungen, wie Geruchsbelästigung und PVC-Verfärbung führen.

Die DE-A-195 29 412 und die US-A-4 517 313 beschreiben die Herstellung von Carbamaten in einer wässrigen Lösung. Diese Carbamaten werden als Katalysator/Treibmittel eingesetzt zur Herstellung von Polyurethanschäumstoffen.

Zur Lösung der o.g. Aufgabe sieht die Erfindung bei einem Verfahren zur Herstellung von Polyurethanschaumstoff in Gegenwart wenigstens eines Katalysators und wenigstens eines Treibmittels vor, daß ein Carbamat oder ein Gemisch von Carbamaten der allgemeinen Formel I 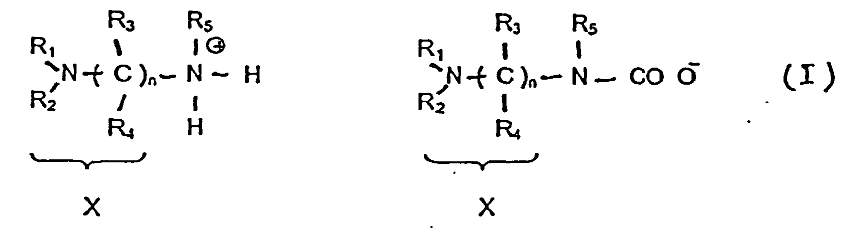 wobei:
R₁ und R₂ für gleiche oder verschiedene Alkylreste stehen,
R₃ und R₄ für gleiche oder verschiedene Reste stehen und Wasserstoff oder Alkylreste bedeuten,
R₅ Wasserstoff, einen Alkanolrest, einen Polyethermonoolrest oder den mit X gekennzeichneten Rest bedeutet
n für 2 oder 3 steht,
unter Ausschluß sonstiger Aminkatalysatoren als Katalysator und zugleich als Treibmittel verwendet wird.

Das Verfahren führt zu Formkörpern, die bei gleicher Härte deutlich reduzierte PVC-Verfärbung bei Wärmelagerung und einen deutlich geringeren Geruch als mit üblichen Katalysatoren hergestellte Formkörper aufweisen.

Unter einem Alkanolrest werden dem Chemiker unter diesem Begriff allgemein bekannte Gruppen verstanden, wie z.B. ein Methanolrest, Ethanolrest, Propanolrest, Isopropanolrest (...* weitere Alkanolreste?).

Unter "Alkylrest" werden alle unter die allgemeine chemische Definition eines Alkylrestes fallenden Gruppen verstanden, insbesondere Methylreste, Ethylreste, Propylreste, Butylreste, Isopropylreste, Isobutylreste, Tertiärbutylreste, Cyclopropylreste, Cyclopenthylreste, Cyclohexylreste, Cycloheptylreste sowie längerkettige verzweigte oder unverzweigte oder cyclische Alkylreste.

Vorzugsweise ist das Verfahren dadurch gekennzeichnet, daß der Polyurethanschaumstoff aus einem Reaktionsgemisch hergestellt wird, welches enthält:
A) eine Polyisocyanatkomponente mit einem NCO-Gehalt von 14 bis 33, 6 Gew.-%, bestehend aus mindestens einem, ggf. modifizierten Polyisocyanat oder Polyisodyanatgemisch, der Diphenylmethanreihe;
B) eine Polyolkomponente einer mittleren Hydroxylfunktionalität von 2 - 3, bestehend aus wenigstens einem Polyether oder Polyesterpolyol mit OH-Zahlen < 56, ggf. unter Zusatz üblicher Hilfes- und Zusatzstoffe, wie sie aus der Polyurethanchemie bekannt sind.

Weiter vorzugsweise kann das Reaktionsgemisch zusätzlich Vernetzungs- und/oder Kettenverlängerungsmittel enthalten, die aus mindestens einer difunktionellen oder trifunktionellen Verbindung mit einer OH- bzw. NH-Zahl von 56 bis 1810 in Mengen von 1 bis 20 Gew.-% bezogen auf das Gewicht der Polyolkomponente (B) bestehen.

Die Polyisocyanatkomponente A) ist vorzugsweise bei 20°C flüssig und weist einen NCO-Gehalt von 14 bis 33,6 vorzugsweise von 20 bis 30 Gew.-%, auf. Es handelt sich um mindestens ein, gegebenenfalls chemisch modifiziertes, Polyisocyanat oder Polyisocyanatgemisach der Diphenylmethanreihe.

Hierunter sind insbesondere 4,4'-Diisocyanatodiphenylmethan, dessen technische Gemische mit 2,4'-Diisocyanatodiphenylmethan und gegebenenfalls 2,2'-Diisocyanatodiphenylmethan, Gemische dieser Diisocyanate mit ihren höheren Homologen, wie sie bei der Phosgenierung von Anilin/Formaldehyd-Kondensaten anfallen und/oder bei der destillativen Aufarbeitung von derartigen Phosgenierungsprodukten erhalten werden, zu verstehen. Bei der "chemischen Modifizierung" dieser Polyisocyanate handelt es sich insbesondere um die an sich bekannte Urethan-Modifizierung, z.B. durch Umsetzung von bis zu 30 Äquivalentprozent der vorliegenden NCO-Gruppen mit Polypropylenglykolen eines maximalen Molekulargewichts von 700 oder um eine an sich bekannte Carbodiimidisierung von bis zu 30% der vorliegenden NCO-Gruppen. Allophanat- oder Biuretmodifizierungen der genannten Isocyanate sind erfindungsgemäß ebenfalls möglich.

Die Komponente B) weist eine mittlere Hydoxylfunktionalität vo 2 bis 3 auf und besteht aus mindestens einem Polyhydroxypolyether des Molekulargewichts 2000 bis 10000, vorzugsweise 3000 bis 6000 und/oder mindestens einem Polyhydrosypolyether des Molekulargewichts 2000 bis 10000, vorzugsweise 2000 bis 4000. Diese Angaben bezüglich des Molekulargewichts beziehen sich auf das aus OH-Funktionalität und OH-Gehalt errechenbare Molekulargewicht.

Geeignete Polyhydroxypolyether sind die aus der Polyurethanchemie an sich bekannten Alkoxylierungsprodukte von vorzugsweise di- oder trifunktionellen Startermolekülen bzw. Gemischen derartiger Startermoleküle. Geeignete Startermoleküle sind beispielsweise Wasser, Ethylenlykol, Diethylenglykol, Propylenglykol, Trimethylolpropan oder Glycerin. Zur Alkoxylierung eingesetzte Alkylenoxide sind insbesondere Propylenoxid und Ethyoxid, wobei diese Alkyenoxide in beliebiger Reihenfolge und/oder als Gemisch zum Einsatz gelangen können. Alkoxylierungsprodukte, die durch die Umsetzung eines Starters mit Tetrahydrofuran entstehen, können ebenfalls zum Einsatz kommen (PTMEG).

Geeignete Polyesterpolyole sind die an sich bekannten, Hydroxylgruppen aufweisenden Veresterungsprodukte von vorzugsweisezweiwertigen Alkoholen wie beispielsweise Ethylenglykol, Propylenglykol, Neopentylglykol, 1,4-Butandiol, 1,6-Hexandiol mit unterschüssigen Mengen an vorzugsweise difunktionellen Carbonsäuren wie beispielsweise Bernsteinsäure, Adipinsäure, Phthalsäure, Tetrahydrophthalsäure, Hexahydrophtalsäure oder Gemischen derartiger Säuren.

Bei den difunktionellen oder trifunktionellen Kettenverlängerungs bzw. Vernetzungsmitteln handelt es sich vorzugsweise um solche in einem Molekulargewichtsbereich 62 bis 1999, vorzugsweise 62 bis 400. Falls es sich um keine definierten Verbindungen handelt, bezieht sich diese Angabe bezüglich des Molekulargewichtswerts ebenfalls auf den aus OH-Funktionalität und OH-Zahl errechneten Wert.

Zu den bevorzugten Kettenverlängerungsmitteln (C) gehören einfache zweiwertige Alkohle eines unter 200 liegenden Molekulargewichts wie beispielsweise Ethylenglykol, 1,3-Propandiol, 1,4-Butandiol, 1,6-Hexandiol oder Gemische derartiger einfacher Diole. Als Komponente C) bzw. als Teil der Komponente C) ebenfalls geeignet sind den gemachten Angaben bezüglich des Molekulargewichts entsprechende, Ethergruppen aufweisende Diole, wie sie durch Propoxylierung und/oder Ethoxylierung von zweiwertigen Startermolekülen der bereits oben beispielhaft genannten Art zugänglich sind.

Als Kettenverlängerungsmittel C) ebenfalls geeignet sind aromatische Diamine mit sterisch gehinderten Aminogruppen wie insbesondere 1-Methyl-3,5-diethyl-2,4-diaminobenzol und dessen technischen Gemischen mit 1-Methyl-3,5-diethyl-2,6-diaminobenzol (DETDA).

Desweiteren können funktionelle Verbindungen insbesondere trifunktionelle Alkohole wie z.B. Glycerin, Trimethylolpropan, Hexantriol-(2,2,6), Butantriol-(1,2,4) als Vernetzungsmittel als Vernetzungsmittel eingesetzt werden.
Alkanolamine wie beispielsweise Mono-, Di-Triethanolamin. Diisopropanolamin und andere sind ebenfalls geeignet.
Beliebige Gemische der beispielhaft genannten Kettenverlängerungsmittel können ebenfalls eingesetzt werden.

Die Kettenverlängerungs- bzw. Vernetzungsmittel C) werden beim erfindungsgemäßen Verfahren in Mengen von 1 bis 20, vorzugsweise 4 bis 12 Gew.-%, bezogen auf das Gewicht der Komponenten B), eingesetzt.

Als Hilfs- und Zusatzmittel werden einerseits die erfindungswesentlichen Carbamate und andererseits Zusatzmittel der an sich bekannten Art verwendet. '

Bei den erfindungswesentlichen Carbamaten handelt es sich um Verbindungen der bereits o.g. allgemeinen Formel, wobei die Variablen R₁ bis R₅ und n die bereits o.g. Bedeutung haben.

Vorzugsweise werden solche Carbamate der folgenden allgemeinen Formel eingesetzt, 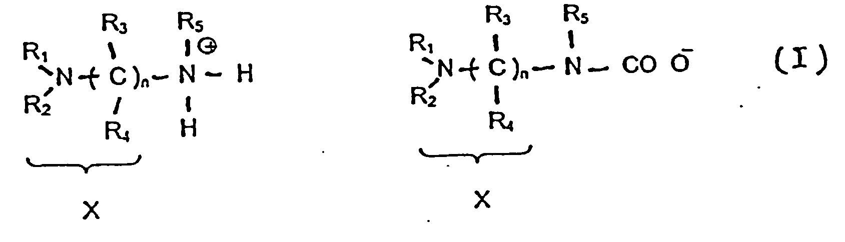 wobei:
R₅ Wasserstoff, eine Alkylrest oder den mit X gekennzeichneten Reste bedeuten.
R₁ und R₂ Methylreste bedeuten.
R₃ und R₄ Wasserstoff bedeuten und
n für 3 steht.

Die Herstellung der Carbamate kann durch einfache Sättigung der zugrundeliegenden Diamine der Formel 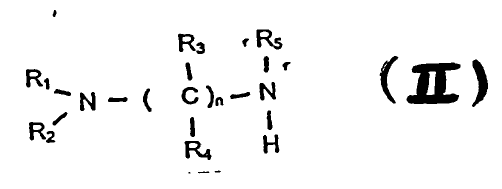 mit gasförmigen oder festem Kohlendioxid bei Temperaturen zwischen 40 und 130°C mit oder ohne Verwendung eines geeigneten Verdünnungsmittel erfolgen.

Besonders bevorzugt sind 3-Dimethylamino propyl amin und Bis(3-dimethylamin propyl)amin zur Herstellung der Carbamate oder Gemische dieser Amine.

Bei der Durchführung des erfindungsgemäßen Verfahrens wird das als Treibmittel verwendete Carbamat in einer Menge von weniger als 8 Gew.-%, vorzugsweise 0,1 bis 6, vorzugsweise 0,5 bis 5 Gew.-%, bezogen auf das Gewicht der Komponente B), verwendet.

Weitere, gegebenenfalls mitzuverwendende Hilfs- und Zusatzmittel (D) sind die bei der Herstellung von Polyurethanschaumstoffen üblichen wie z.B. Aktivatoren, Stabilisatoren oder auch sonstige halogenfreie Treibmittel wie insbesondere Wasser, welches gegebenenfalls in einer Menge von bis zu 0,5 Gew.-%, bezogen auf das Gewicht der Komponente B), mitverwendet werden.

Vorzugsweise wird das erfindungsgemäße Verfahren jedoch mit Gesamtwassermengen von etwa 0,1 Gew.-% durchgeführt.

Die Ausgangskomponenten werden im übrigen in solchen Mengen eingesetzt, die einer Isocyanat-Kennzahl von 80 bis 120, vorzugsweise 95 bis 105, entsprechen.

zur Durchführung des erfindungsgemäßen Verfahrens werden im allgemeinen die Komponenten B) bis D) zu einer "Polyolkomponente" vereinigt, die dann mit der Polyisocyanatkomponente A) vermischt und vorzugsweise in geschlossenen Formen zur Reaktion gebracht wird. Hierbei bedient man sich üblicher Meß- und Dosierungsvörrichtugnen. Als Formwerkzeuge werden beispielsweise Schuhsohlen bzw. Schuhbauteilformen (zur Herstellung von Schuhsohlen oder Schuhbauteilen nach dem Gieß- oder Direktbesohlungsverfahren), Lenkrad- bzw. Spoilerformen oder Formen für Schutzpolster im Autoinnenraum verwendet, deren Innenwände vor Befüllen der Form oftmals mit üblichen Formtrennmitteln beschichtet werden.

Zur Herstellung anderer Schumstoffteile, beispielsweise freigeschäumter Blöcke, werden übliche, bekannte Gieß-, Spritz- oder sonstige Verfahren verwendet.

Die Temperatur der Reaktionskomponenten (Polyisocyanatkomponente A) bzw. Polyolkomponente) liegt im allgemeinen innerhalb des Temperaturbereichs von 20 bis 45°C. Die Temperatur der Formwerkzeuge liegt im allgemeinen bei 20 bis 70°C.

Die Menge des in die Form eingetragenen schäumfähigen Materials wird so bemessen, daß Rohdichten der Formteile von 200 bis 700kg/m³ resultieren.

In Weiterbildung des Verfahrens kann zusätzlich wenigstens ein weiteres Treibmittel verwendet werden, wobei vorzugsweise die aus der Polyurethanchemie bereits bekannten Treibmittel Anwendung finden. Weiterhin kann zusätzlich wenigstens ein weiterer Co-Katalysator eingesetzt werden, vorzugsweise ein Metallkatalysator wie z.B. Dibutylzinndilaurat oder Zinndioktoat.

Das Verfahren kann vorzugsweise zur Herstellung von Schaumstoffummantelungen, von Lenkrädern, Spoilern, sowie Schutzpolstern in Autoinnenräumen eingesetzt werden. Außerdem ist die Herstellung von Schuhsohlen bzw. Schuhbauteilen, insbesondere nach dem Gieß- oder Direktbeschichtungsverfahren möglich. Die erfindungsgemäßen Verfahrensprodukte können als weiche, harte oder halbharte Polyurethanschaumstoffe ausgebildet sein. Vorzugsweise handelt es sich um halbharte Polyurethanschaumstoffe mit kompakter Oberfläche des Härtebereichs Shore A 20 bis 80. In den nachstehenden Beispielen beziehen sich alle Prozentangaben auf das Gewicht.

### Beispiele

### Ausgangsmaterialien

### Polyisocyanat 1:

Polyisocyanatgemisch mit einem NCO-Gehalt von 28% und einer Viskosität von 130 mPa s, bestehend aus gleichen Gewichtsteilen (i) eines Polyisocyanats mit einem NCO-Gehalt von 24,5 % und einer Viskosität (25°C) von 500 mPa s, das durch Phosgenierung eines Anilin/Formaldehyd-Kondensats und anschließende Umsetzung des Phosgenierungsproduktes mit Polypropylenglykol der OH Zahl 515 erhalten wurde, und (ii) einem Polyisocyanatgemisch der Diphenylmethanreihe mit einem NCO-Gehalt von 31,5% und einem Gehalt an Diisocyanatodiphenylmethan-Isomeren von 60% und höherkernigen Homogen von 40%.

### Polyisocyanat 2:

Modifiziertes 4,4'MDI mit einem NCO-Gehalt von 30%, das durch partielle Carbodiimidisierung der NCO-Gruppen hergestellt wird.

### Polyol 1:

Polyethertriol der OH-Zahl 36, hergestellt durch Propoxylierung von Trimethylolpropan mit anschließender Ethoxylierung des Propoxylierungsproduktes (PO:EO-Gewichtsverhältnis ≅ 85:15)

### Polyol 2:

Polyethertriol der OH-Zahl 28, hergestellt durch Propoxylierung von Trimethylolpropan mit anschließender Ethoxylierung des Propoxylierungsproduktes (PO:EO-Gewichtsverhältnis ≅ 85:15) gepfropft mit 20 Gew.-% Styrol/Acrylnitril (Gewichtsverhältnis ≅ 40:60).

### Carbamat 1:

In 400 g 3-Dimethylaminopropyl amin in 400g Ethylenglykol wird bis zur Sättigung CO₂ eingeleitet. Die aufgenommene CO₂-Masse beträgt 156 g und die Viskosität 1500 mPa s.

### Carbamat 2:

In 400 g Bis(3-dimethylaminopropyl)amin in 400g Ethylenglykol wird bis zur Sättigung CO₂ eingeleitet. Die aufgenommene CO₂-Masse beträgt 94 g und die Viskosität 672 mPa s.

### Carbamat 3 (nicht erfindungsgemäß):

In 750 g Aminoethanol werden bis zur Sättigung 220g CO₂ eingeleitet, wobei die Viskosität dieser Verbindung 22000 mPa s beträgt. Dieses Produkt wird mit 750 g Ethylenglykol zum Carbamat III verdünnt.

Der Geruch wurde nach der VDA-Empfehlung 270 Variante B-3 bestimmt. Die Note 1 steht darin für nicht wahrnehmbar und die Note 6 für unerträglich.

Die PVC-Verfärbung wurde nach Kontaktwärmelagerung in Anlehnung an die VW Zentralnorm PV 3355 bestimmt. Um Überkreuzkontamminnation zu vermeiden, wurden die Proben jeweils getrennt in einem 1,5 Liter Glasgefäßen im Umluftwärmeschrank 72h bei 115°C gelagert.

### Beispiel 1

Über eine für die Herstellung von Lenkrädern übliche Hochdruckmaschine von Krauss Maffei des Typs RIM Star 12 mit Umlenkmischkopf wird ein schaumfähiges Gemisch der nachstehenden Menge in eine produktionsübliche Lenkradform so eingetragen, daß eine Rohdichte von 500kg/m³ resultiert.

Werkzeugtemperatur 45°C, Rohstofftemperatur 30°C, Formstandzeit 2,5 min, Schußzeit 5s, Austragsleistung 153g/s, Teilegewicht (ohne Einleger) 699g, Austrieb 74g.

Die Innenwände der Form werden mit einem handelsüblichen Formtrennmittel besprüht (Acmosil 36-4536).

| Polyolkomponente | |
|---|---|
| Polyol 1 | 80 Gew.-Tle. |
| Polyol 2 | 10 Gew.-Tle. |
| Ethylenglykol | 6,05 Gew.-Tle. |
| Diethanolamin | 0,45 Gew.-Tle. |
| Formrez UL 28* | 0,013 Gew.-Tle. |
| Wasser | 0,1 Gew.-Tle. |
| Carbamat I | 2,0 Gew.-Tle. |

| | |
|---|---|
| *Handelsprodukt von Witco | |

| Polyisocyanatkomponente | |
|---|---|
| Polyisocyanat 1 | 26,5 Gew.-Tle. |
| Polyisocyanat 2 | 26,5 Gew.-Tle. |
| Eigenschaften | |
| PVC-Verfärbung | kaum erkennbar |
| Härte (Shore A) | 56 |
| Fließverhalten | Gut |
| Geruch (VDA 270(B3)) | 2,5 |

Das Lenkrad entspricht optisch den hohen Anforderungen an ein Lenkrad.

### Beispiel 2

Über eine für die Herstellung von Lenkrädern übliche Hochdruckmaschine von Krauss Maffei des Typs RIM Star 12 mit Umlenkmischkopf wird ein schaumfähiges Gemisch der nachstehenden Menge in eine produktionsübliche Lenkradform so eingetragen, daß eine Rohdichte von 500kg/m³ resultiert.

Werkzeugtemperatur 45°C, Rohstofftemperatur 30°C, Formstandzeit 2,5 min, Schußzeit 5s, Austragsleistung 153g/s, Teilegewicht (ohne Einleger) 625g, Austrieb 120g.

Die Innenwände der Form werden mit einem handelsüblichen Formtrennmittel besprüht (Acmosil 36-4536).

| Polyolkomponente | |
|---|---|
| Polyol 1 | 80 Gew.-Tle. |
| Polyol 2 | 10 Gew.-Tle. |
| Ethylenglykol | 6,05 Gew.-Tle. |
| Diethanolamin | 0,45 Gew.-Tle. |
| Formrez UL 28* | 0,013 Gew.-Tle. |
| Wasser | 0,1 Gew.-Tle. |
| Carbamat I | 2,0 Gew.-Tle. |
| Carbamat III | 0,5 Gew.-Tle. |

| | |
|---|---|
| *Handelsprodukt von Witco | |

| Polyisocyanatkomponente | |
|---|---|
| Polyisocyanat 1 | 27,5 Gew.-Tle. |
| Polyisocyanat 2 | 27,5 Gew.-Tle. |
| Eigenschaften | |
| Härte (Shore A) | 55 |
| PVC-Verfärbung | kaum erkennbar |
| Fließverhalten | Sehr gut |
| Geruch (VDA 270(B3)) | 1,5 |

Das Lenkrad entspricht optisch den hohen Anforderungen an ein Lenkrad.

### Beispiel 3

Über eine für die Herstellung von Lenrädern übliche Hochdruckmaschine von Krauss Maffei des Typs RIM Star 12 mit Umlenkmischkopf wird ein schaumfähiges Gemisch der nachstehenden Menge in eine produktionsübliche Lenkradform so eingetragen, daß eine Rohdichte von 500kg/m³ resultiert.

Werkzeugtemperatur 45°C, Rohstofftemperatur 30°C, Formstandzeit 2,5 min, Schußzeit 5s, Austragsleistung 153g/s, Teilegewicht (ohne Einleger) 763g, Austrieb 10g.

Die Innenwände der Form werden mit einem handelsüblichen Formtrennmittel besprüht (Acmosil 36,4536).

| Polyolkomponente | |
|---|---|
| Polyol 1 | 80 Gew.-Tle. |
| Polyol 2 | 10 Gew.-Tle. |
| Ethylenglykol | 6,05 Gew.-Tle. |
| Diethanolamin | 0,45 Gew.-Tle. |
| Formrez UL 28* | 0,013 Gew.-Tle. |
| Wasser | 0,1 Gew.-Tle. |
| Carbamat II | 1,5 Gew.-Tle. |
| Carbamat III | 0,5 Gew.-Tle. |

| Polyisocyanatkomponente | |
|---|---|
| Polyisocyanat 1 | 27,5 Gew.-Tle. |
| Polyisocyanat 2 | 27,5 Gew.-Tle. |

| Eigenschaften | |
|---|---|
| Härte (Shore A) | 54 |
| PVC-Verfärbung | kaum erkennbar |
| Fließverhalten | Gut |
| Geruch (VDA 270(B3)) | 1,5 |

| | |
|---|---|
| *Handelsprodukt Witco | |

Das Lenkrad entspricht optisch den hohen Anforderungen an ein Lenkrad.

### Beispiel 4

Über eine für die Herstellung von Lenkrädern übliche Hochdruckmaschine von Krauss Maffei des Typs RIM Star 12 mit Umlenkmischkopf wird ein schaumfähiges Gemisch der nachstehenden Menge in eine produktionsübliche Lenkradform so eingetragen, daß eine Rohdichte von 500kg/m³ resultiert.

Werkzeugtemperatur 45°C, Rohstofftemperatur 30°C, Formstandzeit 2,5 min, Schußzeit 5s, Austragsleistung 153g/s, Teilegewicht (ohne Einleger) 625g, Austrieb 120g.

Die Innenwände der Form werden mit einem handelsüblichen Formtrennmittel besprüht (Acmosil 36-4536).

| Polyolkomponente | |
|---|---|
| Polyol 1 | 80 Gew.-Tle. |
| Polyol 2 | 10 Gew.-Tle. |
| Ethylenglykol | 6,05 Gew.-Tle. |
| Diethanolamin | 0,45 Gew.-Tle. |
| Formrez UL 28* | 0,013 Gew.-Tle. |
| Wasser | 0,1 Gew.-Tle. |
| Carbamat I | 2,5 Gew.-Tle. |
| Carbamat III | 1,0 Gew.-Tle. |

| | |
|---|---|
| *Handelsprodukt von Witco | |

| Polyisocyanatkomponente | |
|---|---|
| Polyisocyanat 1 | 27,5 Gew.-Tle. |
| Polyisocyanat 2 | 27,5 Gew.-Tle. |

| Eigenschaften | |
|---|---|
| Härte (Shore A) | 57 |
| PVC-Verfärbung | kaum erkennbar |
| Fließverhalten | Sehr gut |
| Geruch | 2,0 |

Das Lenkrad entspricht optisch den hohen Anforderungen an ein Lenkrad.

### Vergleichsbeispiel 5

Über eine für die Herstellung von Lenkrädern übliche Hochdruckmaschine von Krauss Maffei des Typs RIM Star 121 mit Umlenkmischkopf wird ein schaumfähiges Gemisch der nachstehenden Menge in eine produktionsübliche Lenkradform so eingetragen, daß eine Rohdichte von 500kg/m³ resultiert.

Werkzeugtemperatur 45°C, Rohstofftemperatur 30°C, Formstandzeit 2,5 min, Schußzeit 5s, Austragsleistung 153g/s, Teilegewicht (ohne Einleger) 675g, Austrieb 97g.

Die Innenwände der Form weden mit einem handelsüblichen Formtrennmittel besprüht (Acmosil 36-4536).

| Polyolkomponente | |
|---|---|
| Polyol 1 | 80 Gew.-Tle. |
| Polyol 2 | 10 Gew.-Tle. |
| Ethylenglyikol | 6,18 Gew.-Tle. |
| Diethanolamin | 0,45 Gew.-Tle. |
| Formrez UL 28² | 0,013 Gew.-Tle. |
| Triethylendiamin | 0,07 Gew.-Tle. |
| Toyocat EF³ | 0,2 Gew.-Tle. |
| Toyocat MR³ | 0,4 Gew.-Tle. |
| Wasser | 0,1 Gew.-Tle. |
| Carbamat III | 2,0 Gew.-Tle. |

| | |
|---|---|
| ²Handelsprodukt von Witco ³Handelsprodukte von Toyosoda (spezielle tertiäre Amine) | |

| Polyisocyanatkomponente | |
|---|---|
| Polyisocyanat 1 | 27,1 Gew.-Tle. |
| Polyisocanat 2 | 27,1 Gew.-Tle. |

| Eigenschaften | |
|---|---|
| Härte (Shore A) | 57 |
| PVC-Verfärbung | rot |
| Fließverhalten | Sehr gut |
| Geruch (VDA 270(B3)) | 4,0 |

Das Lenkrad entspricht optisch den hohen Anforderungen an ein Lenkrad.

## Patentansprüche

1. Verfahren zur Herstellung von Polyurethanschaumstoff in Gegenwart wenigstens eines Katalysators und wenigstens eines Treibmittels, **dadurch gekennzeichnet,**
**dass** ein Carbamat oder ein Gemisch von Carbamaten der allgemeinen Formel I 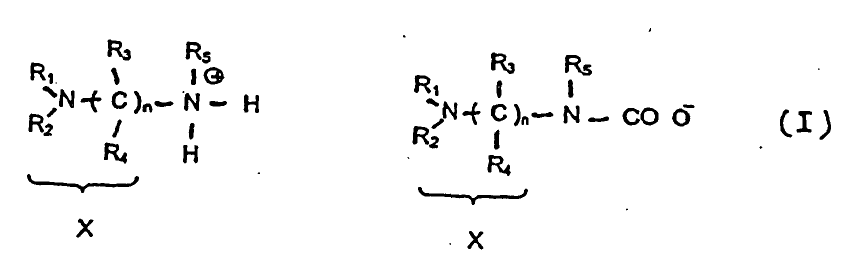 wobei:
R₁ und R₂ für gleiche oder verschiedenen Alkylreste stehen,
R₃ und R₄ für gleiche oder verschiedene Reste stehen und Wasserstoff oder Alkylreste bedeuten,
R₅ Wasserstoff, einen Alkanolrest, einen Polyetermonoolrest oder den mit X **gekennzeichneten** Rest bedeutet, n für 2 oder 3 steht,
als Katalysator und Treibmittel verwendet wird, im Wesentlichen unter Ausschluss sonstiger Aminkatalysatorenund unter Ausschluss von oder in Anwesenheit von bis zu maximal 0,5 Gew.-% Wasser bezogen auf die Komponente aus Polyol und gegebenenfalls Zusatzstoffen.

2. Verfahren nach Anspruch 1, **dadurch gekennzeichnet, daß** der Polyurethanschaumstoff aus einem Reaktionsgemisch hergestellt, welches enthält
A) eine Polyisocyanatkomponente mit einem NCO-Gehalt von 14 bis 33, 6 Gew.-%, bestehend aus mindestens einem, ggf. modifizierten Polyisocyanat oder Polyisocyanatgemisch, der Diphenylmethanreihe;
B) eine Polyolkomponente einer mittleren Hydroxylfunktionalität von 2 - 3, bestehend aus wenigstens einem Polyether oder Polyesterpolyol mit OH-Zahlen < 56, ggf. unter Zusatz üblicher Hilfs- und Zusatzstoffe, wie sie aus der Polyurethanchemie bekannt sind.

3. Verfahren nach Anspruch 2, **dadurch gekennzeichnet, daß** das Reaktionsgemisch weiter wenigstens ein Vernetzungs- oder Kettenverlängerungsmittel aus mindestens einer difunktionellen oder trifunktionellen Verbindung mit einer OH- bzw. NH-Zahl von 56 bis 1810 in Mengen von 1 bis 20 Gew.-% bezogen auf das Gewicht der Polyolkomponente enthält.

4. Verfahren nach einem der Ansprüche 1 bis 3, **dadurch gekennzeichnet, daß** man zusätzlich wenigstens ein weiteres Treibmittel einsetzt.

5. Verfahren nach einem der Ansprüche 1 bis 4, **dadurch gekennzeichnet, daß** man zusätzlich wenigstens einen weiteren Co-Katalysator einsetzt, vorzugsweise einen Metallkatalysator.

6. Verfahren nach einem der Ansprüche 1 bis 5, **dadurch gekennzeichnet, daß** die Carbamate in einer Menge von weniger als 8 Gew.-% bezogen auf das Gewicht der Polyolkomponente (B) eingesetzt werden.

7. Verwendung nach einem der Ansprüche 1 bis 6, **dadurch gekennzeichnet, daß** der Polyurethanschaumstoff durch Umsetzung des Reaktionsgemisches in geschlossenen Formen zu zelligen Formkörpern mit kompakter Oberfläche (Integralschaumstoffen) ausgeformt wird.

8. Verfahren nach Anspruch 7, **dadurch gekennzeichnet, daß** der Polyurethanschaumstoff zu Schaumstoffummantelungen von Lenkrädern, Spoilern, sowie Autoinnenraum-Schutzpolstern ausgeformt wird.

9. Verfahren nach einem der Ansprüche 1 bis 8, **dadurch gekennzeichnet, daß** der Polyurethanschaumstoff zu Schuhsohlen oder Schuhbauteilen nach dem Gieß- oder Direktbeschichtungsverfahren ausgeformt wird.

## Claims

1. Process for producing polyurethane foam in the presence of at least one catalyst and of at least one propellant, **characterized in that**
a carbamate or a mixture of carbamates of the general formula I 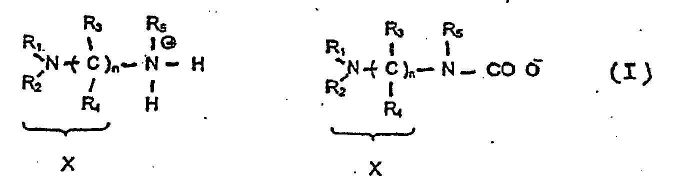 where:
R₁ and R₂ represent the same or different alkyl radicals,
R₃ and R₄ represent the same or different radicals and denote hydrogen or alkyl radicals,
R₅ denotes hydrogen, an alkanol radical, a polyether monool radical or the radical **characterized by** X, n represents 2 or 3,
is used as catalyst and propellant, essentially excluding other amine catalysts and in the absence or presence of up to 0.5 wt.% of water based on the component consisting of polyol and if appropriate additives.

2. Process according to Claim 1, **characterized in that** the polyurethane foam is produced from a reaction mixture which contains:
A) a polyisocyanate component having an NCO content of 14 to 33.6 wt.%, consisting of at least one modified or unmodified polyisocyanate or polyisocyanate mixture of the diphenylmethane series;
B) a polyol component having an average hydroxyl functionality of 2 - 3, consisting of at least one polyether or polyester polyol having OH numbers < 56, optionally with addition of conventional auxiliaries and additives, as are known from polyurethane chemistry.

3. Process according to Claim 2, **characterized in that** the reaction mixture also contains at least one crosslinking or chain-extending agent of at least one difunctional or trifunctional compound having an OH or NH number of 56 to 1810 in quantities of 1 to 20 wt.% based on the weight of the polyol component.

4. Process according to any one of Claims 1 to 3, **characterized in that** it further utilizes at least one additional propellant.

5. Process according to any one of Claims 1 to 4, **characterized in that** it further utilizes at least one additional co-catalyst, preferably a metal catalyst.

6. Process according to any one of Claims 1 to 5, **characterized in that** the carbamates are used in a quantity of less than 8 wt.% based on the weight of the polyol component (B).

7. Use according to any one of Claims 1 to 6, **characterized in that** the polyurethane foam is shaped by transforming the reaction mixture in closed moulds to form cellular mouldings having a compact surface (integral foams).

8. Process according to Claim 7, **characterized in that** the polyurethane foam is shaped to form foam coverings of steering wheels, spoilers, as well as car interior crash padding.

9. Process according to any one of Claims 1 to 8, **characterized in that** the polyurethane foam is shaped to form shoe soles or shoe components by the casting or direct-coating process.

## Revendications

1. Procédé pour la préparation de mousse de polyuréthane en présence d'au moins un catalyseur et d'au moins un agent moussant **caractérisé en ce qu'**un carbamate ou un mélange de carbamates ayant les formules I 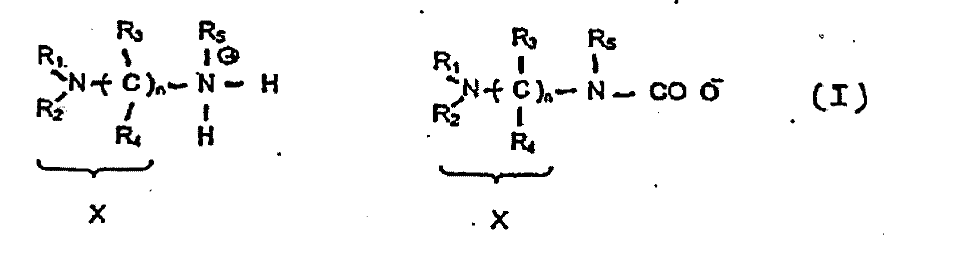 dans lesquelles :
R₁ et R₂ sont des restes alkyles identiques ou différents,
R₃ et R₄ sont des restes identiques ou différents pouvant être de l'hydrogène ou un reste alkyle,
R₅ est un hydrogène, un reste alcanol, un reste polyéthermonool ou un reste **caractérisé par** X et n est égal à 2 ou 3, est utilisé en tant que catalyseur ou agent moussant, essentiellement à l'exclusion d'autres catalyseurs aminés et à l'exclusion ou en présence d'un maximum de 0,5% en poids d'eau par rapport aux composants de polyol et éventuellement d'additifs.

2. Procédé selon la revendication 1, **caractérisé en ce que** la mousse de polyuréthane est préparée à partir d'un mélange réactionnel qui renferme :
A) un composant polyisocyanate avec une teneur en NCO de 14 à 33,6% en poids comprenant au moins un polyisocyanate éventuellement modifié ou un mélange de polyisocyanates de la lignée des diphénylméthanes,
B) un composant polyol d'une fonctionnalité hydroxyle moyenne de 2 à 3, comprenant au moins un polyéther ou un polyesterpolyol avec un nombre d'OH<56, éventuellement avec addition de produits d'addition ou auxiliaires connus dans la chimie des polyuréthanes.

3. Procédé selon la revendication 2, **caractérisé en ce que** le mélange réactionnel comprend en outre au moins un agent de réticulation ou d'allongement de chaîne avec au moins une liaison bifonctionnelle ou trifonctionnelle avec un nombre d'OH ou de NH de 56 à 1810 dans des quantités comprises entre 1 et 20% en poids par rapport au poids des composants polyols.

4. Procédé selon l'une des revendications 1 à 3, **caractérisé en ce que** l'on ajoute en outre au moins un autre agent moussant.

5. Procédé selon l'une des revendications 1 à 4, **caractérisé en ce qu'**on ajoute en outre au moins un autre co-catalyseur, de préférence un catalyseur métallique.

6. Procédé selon l'une des revendications 1 à 5, **caractérisé en ce que** l'on ajoute le carbamate en une quantité inférieure à 8% en poids par rapport au poids du composant polyol (B).

7. Procédé selon l'une des revendications 1 à 6, **caractérisé en ce que** la mousse de polyuréthane est formée par décomposition du mélange réactionnel, dans des formes fermées, en des corps de forme cellulaires avec des surfaces extérieures fermées (mousse intégrale).

8. Procédé selon la revendication 7, **caractérisé en ce que** la mousse de polyuréthane est formée en tant que revêtement de volants de direction, de becquets aérodynamiques, ainsi que de garnitures de protection de l'habitacle de véhicules automobiles.

9. Procédé selon l'une des revendications 1 à 8, **caractérisé en ce que** la mousse de polyuréthane est formée en tant que semelle de chaussure ou autre composant de chaussure selon un procédé de coulée ou de revêtement direct.
